# EUROPEAN PATENT APPLICATION

(11) **EP 1 296 240 A2**
(43) Date of publication of application: **26.03.2003**
(21) Application number: 02253810.2
(22) Date of filing: 30.05.2002
(51) Int. Cl.: G06F 9/46

(54) **System and method for enabling transaction-based service utilizing non-transactional resources**

(30) Priority: 01.06.2001 US 872442
(71) Applicant: Hewlett-Packard Company, Palo Alto, CA 94304 (US)
(72) Inventor: Raventos, Joan, Vilafranca del Penedes, 08720 Spain (ES)
(74) Representative: Tollett, Ian

(57) **Abstract**

A system and method are disclosed which enable performance of a transaction-based service utilizing non-transactional resources (410A, 410B, 410C). In one embodiment, a system is provided that includes one or more non-transactional resources. Such resources may, for example, be resources as are commonly implemented within an IDC. The system further includes at least one component that defines one or more tasks executable by at least one of such non-transactional resources. For instance, a plugin component (Plugin 1, Plugin 2, Plugin N) may be developed and communicatively coupled to a resource manager 405, and such plugin component may define various services (or tasks or "functions") that may be performed on a non-transactional resource. Thus, such resource manager may call the particular functions defined by the plugin component as needed to perform a requested transaction. The system may further include a resource manager operable to control execution of the tasks defined by such component (e.g., plugin component) as a transaction.

## Description

This invention relates in general to a system for performing a desired functional service as a transaction utilizing one or more non-transactional resources. In particular, it relates to a system and method that provide a Resource Manager that enables use of non-transactional resources to perform services, such as activation of services, in a transaction-based manner. For example, in one embodiment, the Resource Manager acts as a proxy to implement a transaction-based protocol, such as the XA protocol, for activating a service utilizing non-transactional resources that are not compliant with such transaction-based protocol.

Within computing environments, it is often desirable to activate or modify a particular service, and in order to fully activate or modify such a particular service, it may be necessary to complete various tasks within different servers and/or different software applications. Service activation has traditionally been performed in a manual method, which requires one or more human users to interact with different servers and/or software applications in order to manually complete the various tasks for activating the desired service. As a computing environment grows in size and complexity, it becomes difficult and inefficient for human users to manually perform all of the tasks necessary to activate a desired service within such computing environment.

For example, a common type of computing environment in which service activation is often desired is an Internet Data Center (IDC). An IDC may include hundreds of different elements, such as different servers and software applications, many of which may need to be updated in order to properly activate a desired service. For example, an IDC may include web hosting servers and ftp servers, as well as other servers for providing database services, software application services, Domain Name Service (DNS), Lightweight Directory Access Protocol (LDAP) service (and/or other directory services), monitoring operation of one or more other servers/services, managing operation of the IDC, monitoring Quality of Service (QoS) provided by the IDC, usage measurement services, and billing services. Each of the different servers and software applications within the computing environment (e.g., IDC) are typically independent and may be provided by different vendors.

Assume that a user desires to activate a service within a prior art IDC, a plurality of different servers and/or software applications may need to be updated to fully activate the desired service. For instance, suppose that a customer of an IDC desires to have a new web site activated (i.e., desires that the IDC provide a web server for hosting the customer's web site). To activate such a new service, the IDC may need to update a web server for hosting the web site. That is, tasks may need to be performed at the web server in order to configure it for hosting the web site. Additionally, various other servers and/or software applications may need to be updated/notified of the new web hosting service. For instance, a database server may need to be configured to provide database services for the web site, a DNS server may need to be configured to provide a domain name for the web site, management services may need to be configured to manage operation of the new service (e.g., to manage performance of the web server, etc.), usage measurement services may need to be configured to maintain measurement of the usage of the new web site, and billing services may need to be configured to properly bill the customer for the newly activated web hosting service.

As described above, prior art computing environments, such as IDC environments, typically require that one or more human users manually perform the various tasks required for activating a new service. For instance, in the above example, human users may be required to interact with different servers and/or different software applications in order to complete the tasks for properly configuring the web server for hosting the desired web site, configuring a database to provide database services for the web site, configuring a DNS server, configuring management services, configuring usage measurement services, and configuring billing services. All of such tasks may need to be completed in order to fully and properly activate the desired service (i.e., the desired web hosting service in this example).

Such a manual approach is problematic for various reasons. First, it is not cost-efficient for the IDC because it may require many human users and/or many man-hours to activate a new service. Additionally, such a manual process results in undesirable delays in activating a service. Many computing environments, such as IDCs, are very competitive, and customers typically desire having services activated as quickly as possible. Thus, the delays resulting from such manual approach may be undesirable because it may prevent the IDC (or other computing environment) from providing sufficiently fast service activation to customers.

Furthermore, prior art techniques for activating service may result in completion of certain tasks without completion of other necessary tasks for properly activating the desired service. That is, various tasks that should be completed in order to fully and properly activate a service are typically performed as separate, stand-alone tasks. For instance, continuing with the above example, one user may take responsibility for configuring the web server for the desired web site, another user may take responsibility for configuring the database services, and yet another user may have responsibility for configuring the billing services. Because such tasks are performed as separate transactions, it is possible that the web server and database may be activated to begin providing web hosting to the customer without the billing and other services (e.g., management services) being configured. Many servers and software applications that may need to be properly configured in order to activate a desired service are separate elements that may be provided by different vendors, and are typically not implemented in a manner that enables interaction between such separate elements to activate a service as a single transaction. Rather, each element typically requires configuring as a separate transaction. Further still, such manual process of the prior art lends itself to many other errors that may be encountered from such reliance on human users performing activation (e.g., the possibility of human-error is present).

The present invention is directed to a system and method which enable performance of a transaction-based service utilizing non-transactional resources. According to one embodiment, a system is provided that includes one or more non-transactional resources. Such resources may, for example, be resources as are commonly implemented within an IDC. The system further includes at least one component that defines one or more tasks executable by at least one of such non-transactional resources. For instance, in certain embodiments, a plugin component may be developed and communicatively coupled to a resource manager, and such plugin component may define various services (or tasks or "functions") that may be performed on a non-transactional resource. Thus, such resource manager may call the particular functions defined by the plugin component as needed to perform a requested transaction. The system may further include a resource manager operable to control execution of the tasks defined by such component (e.g., plugin component) as a transaction.

According to various embodiments of the present invention, a Resource Manager is disclosed, which acts as a proxy implementing a transactional protocol (e.g., the X/Open XA protocol) in order to allow non-transactional resources (e.g., applications and/or devices) to be included within a transactional operation. At least one embodiment of the present invention provides an architecture that defines the concept of a plugin, a component which can be easily extended to incorporate new resources (e.g., applications and/or devices) under the transactional framework. For instance, plugins may be developed that define tasks to be performed via non-transactional resource(s), and when coupled with the Resource Manager, the tasks defined by one or more plugins may be performed as a transaction by the non-transactional resource(s). For example, plugins may be implemented to cover a wide range of IDC resources (e.g., IDC software applications and/or devices), such as web servers, ftp servers, DNS servers, LDAP services, usage measurement services, QoS services, management services, and database services, which may be non-transactional resources.

According to at least one embodiment, the plugins may each declare one or more services to the Resource Manager, which at bootstrap and via introspection, exports them to a message bus, such as an Enterprise Application Integration (EAI) bus, or application server (e.g., BEA elink or any Enterprise JavaBeans (EJB) application server). Once the services are enlisted to be part of a transaction, the Resource Manager takes care of interfacing the bus' Transaction Manager in the sequence of events defined by a transaction protocol (e.g., the XA protocol), and to appropriately invoke the proper plugins to execute the service, validate it, undo it, or check for complete rollback of the service.

A number of preferred embodiments of the invention will now be described with reference to the drawings, in which:-
Fig. 1 shows an exemplary computing environment in which it may be desirable to perform service activation;
Fig. 2 shows an exemplary computing environment in which various embodiments of the present invention may be implemented;
Fig. 3A shows a typical X/Open DTP model within which various embodiments of the present invention may be implemented;
Fig. 3B shows an exemplary implementation of one embodiment of the present invention represented as a transactional model;
Fig. 4 shows an exemplary implementation of one embodiment of the present invention in further detail;
Fig. 5 shows an exemplary implementation for enabling plugins to be utilized by the Resource Manager according to one embodiment of the present invention;
Fig. 6 shows actions that may be performed at boot time (or "bootstrap") according to at least one embodiment of the present invention;
Fig. 7 shows actions that may be performed during execution of a transaction according to at least one embodiment of the present invention;
Fig. 8 shows an exemplary flow diagram which illustrates typical execution of a transaction according to the X/Open XA protocol;
Fig. 9 shows a logical representation of a preferred embodiment of the present invention;
Fig. 10 shows exemplary modes of operation for the Resource Manager that may be available with certain embodiments of the present invention; and
Fig. 11 shows an exemplary task life cycle for a transaction in the Online Mode of operation, which indicates the various task states that may be maintained by the Resource Manager in a transaction log to indicate the exact status of the performance of the transaction.

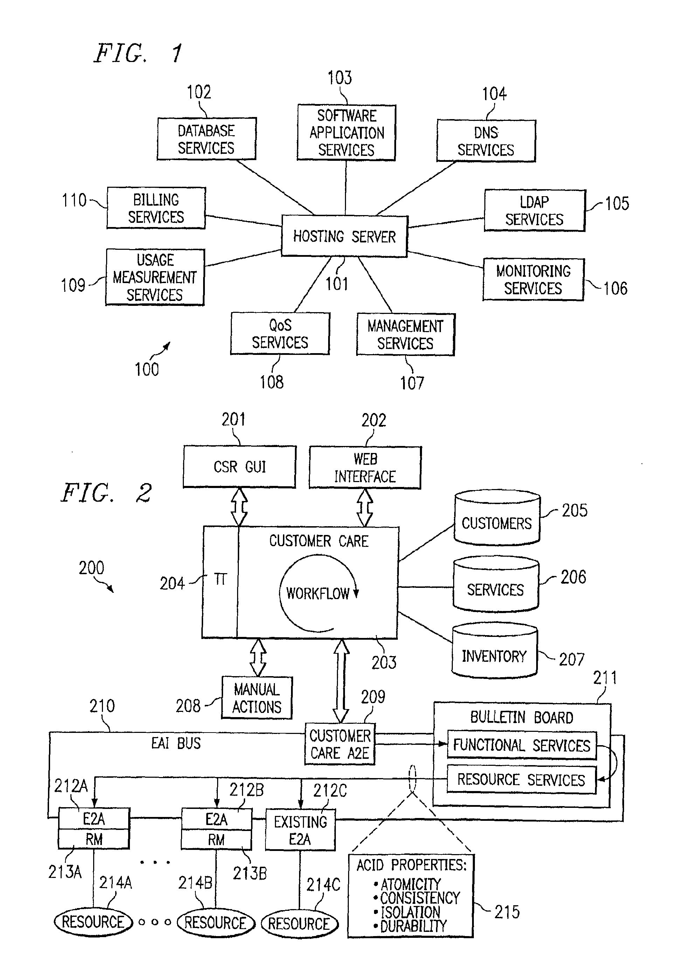

Various embodiments of the present invention are now described with reference to the above Figs., wherein like reference numerals represent like parts throughout the several views. Turning to Fig. 1, a canonical representation of an exemplary computing environment 100 is shown in which it may be desirable to perform service activation. For instance, computing environment 100 may be an IDC in which a customer may request activation of a new service, such as activation of a web hosting service. Exemplary computing environment 100 includes hosting server 101, which may be a web server for providing web hosting services or a ftp server, as examples. As further shown in this example, various other services 102-110, which may be embodied in different servers and/or in different software applications, are also included within computing environment 100.

In activating a desired service, it may be desirable to complete certain tasks with one or more other services 102-110. For example, to activate a web hosting service on server 101, it may be desirable to properly configure one or more of services 102-110. For instance, a database server may need to be configured to provide database services 102 for web server 101, various software application services 103 may need to be configured, a DNS server may need to be configured to provide DNS services 104, LDAP services 105 may need to be configured, monitoring services 106 may need to be configured to provide monitoring of the desired web hosting services, management services 107 may need to be configured to manage operation of the web hosting service (e.g., to manage performance of the web server, etc.), quality of service (QoS) services 108 may need to be configured for the web hosting service, usage measurement services 109 may need to be configured to maintain measurement of the usage of the new web site, and billing services 110 may need to be configured to properly bill the customer for the newly activated web hosting service. As described above, in prior art systems, such activation of various services 102-110 is typically performed manually by a human user. Additionally, activation of each of various services 102-110 is typically performed as a separate, independent task.

Various embodiments of the present invention provide a system and method for robotically activating services, such as the various services 102-110 in the example of Fig. 1, as a transaction. It should also be recognized that in this manner "robotically" means that a system is capable of activating desired services autonomously or with minimal human intervention. For instance, according to various embodiments of the present invention, a system is disclosed that includes a Resource Manager (which may be referred to herein as an "Activation Resource Manager") that enables such system to robotically activate various services in a transactional-based manner. For example, upon a customer requesting activation of a new web hosting service (as in the example of Fig. 1), various embodiments of the present invention may utilize an Activation Resource Manager to activate services 102-110 (as well as activating web server 101) as a transaction. Thus, all of such services may be performed (if at all) within a common transaction.

Such a transaction-based approach is commonly implemented in applications within the financial industry. For instance, suppose funds are to be transferred from a first account to a second account, such a transfer of funds is typically performed in a transactional manner. In this manner, either the funds will be successfully recorded in the second account and successfully removed from the first account, or neither of such tasks will be performed. That is, in performing a transfer of funds from a first account to a second account, it is desirable that the funds be recorded in the second account and be removed from the first account. An implementation that would allow for the possibility that the funds be recorded in the second account while also remaining in the first account, or one that would allow for the possibility that the funds be removed from the first account without being recorded in the second account is undesirable. Accordingly, rather than performing the recording of funds in the second account and the removal of funds from the first account as separate, independent tasks, such tasks may be performed as a transaction, wherein either both tasks are performed or neither is performed, thereby ensuring the integrity of the financial application.

Certain computing environments of the prior art have been implemented to enable tasks to be performed as transactions. In general, a "transaction" is used to define a logical unit of work that either wholly succeeds or has no effect whatsoever. For instance, a transaction-based approach within a computing environment may allow work being performed in many different processes, possibly at different sites, to be treated as a single unit of work. Within a distributed transaction processing (DTP) environment, the work being performed (within the bounds of a transaction) can occur on many different platforms and may involve many different databases (or other applications) from different vendors. A transaction protocol may be utilized within the DTP environment to coordinate and control the behavior of the various resources performing work as a transaction.

X/Open is a standards body within DTP environments, which has developed a popular transaction-based protocol (i.e., the "XA" interface or "XA" protocol). In an abstract model of a typical DTP environment utilizing the X/Open architecture, an X/Open application calls on resource managers (RMs) to provide a variety of services. For example, a database RM provides access to data in a database. In general, a resource manager is a process that provides access to shared resources. Resource managers interact with a transaction manager (TM), which controls all transactions for the application. Thus, the X/Open DTP architecture defines the communications between an application, a transaction manager, and one or more resource managers.

The X/Open XA interface is a specification that describes the protocol for transaction coordination, commitment, and recovery between a transaction manager and one or more resource managers. Further information regarding typical transaction-based implementations is provided in "BEA TUXEDO Programmer's Guide" for BEA TUXEDO Release 6.5, document edition 6.5 (February 1999) available from BEA Systems, Inc., the disclosure of which is hereby incorporated herein by reference. Also, further information is available in a white paper by Donald A. Marsh, Jr. entitled "Global Transactions - X/Open XA -Resource Managers" version 3.0 (Created June 2, 1998, and as Last Modified January 1, 2000), which is available from Aurora Information Systems, Inc., 8617 East Colonial Drive, Suite 1500, Orlando, Florida 32817, the disclosure of which is hereby incorporated herein by reference.

Various types of transactions may be available within a DTP environment. One type of transaction is commonly referred to as a "flat transaction." The term "flat transaction" generally denotes the atomic unit of work performed by many entities (or resources) and is controlled from one point. It may contain any arbitrary number of actions that are taken as a whole and considered to be one action (i.e., one transaction). It is considered "flat" because all work is performed at the same level inside a single Begin/End Work bracket. However, the work may be performed by many different resources (e.g., servers and/or applications) and may be distributed across many different platforms.

Various Application Transaction Monitor Interface (ATMI) calls (such as those available within the BEA TUXEDO® system) may be utilized to control flat transactions. One such ATMI call that may be utilized is a begin command (e.g., "tpbegin()" in the TUXEDO system), which may be called by an initiator of a transaction to denote the start of a transaction. The "initiator" of a transaction may be any application that wants to invoke the transactional service, such as a client application. Within an IDC environment, the invocation typically comes from the Order Management (Mgmt) application, which is the entry point for new accounts.

Once the begin command is called, communication with any other server can place that server in "transaction mode" such that the server's work becomes part of the transaction. Programs that join a transaction may be referred to as participants (or resources). A transaction generally has one initiator and may have several participants. Participants can influence the outcome of a transaction by the return values they use when they call a return command (e.g., "tpreturn()" in the TUXEDO system). Another ATMI call is an abort command (e.g., "tpabort()" in the TUXEDO system), which an initiator may call to denote the failure of a transaction. Generally, all changes made to the state of an object during the transaction are undone when the abort command is called. Participants may express their desire to have a transaction aborted by calling tpreturn() (or other appropriate return command) with a fail flag (e.g., TPFAIL) included therein. Yet another ATMI call is a commit command (e.g., "tpcommit()" in the TUXEDO system), which an initiator may call to denote the success of a transaction. Generally, all changes made to the state of an object during the transaction are made permanent in response to the commit command. Participants may express their desire to have a transaction committed by calling tpreturn() (or other appropriate return command) with a success flag (e.g., TPSUCCESS) included therein.

Thus, certain computing environments of the prior art have been implemented to enable tasks to be performed as transactions. However, many computing environments include non-transactional resources. That is, many computing environments include resources that are not compliant with (or do not recognize) a transactional protocol, and therefore such non-transactional resources are not readily available to perform tasks as a transaction. For instance, in the example of Fig. 1, services 102-110 that need to be activated along with activation of web hosting services on web server 101 may be independent services provided by separate vendors (e.g., are vendor-specific applications), which are not transactional-based. That is, the various services to be activated within an IDC, for example, are often not transaction-based services that are readily capable of being activated as a single transaction. Therefore, as described above, such non-transactional services are traditionally activated as separate tasks, rather than as a common transaction, in prior art implementations.

According to various embodiments of the present invention, an Activation Resource Manager is disclosed, which acts as a proxy implementing a transactional protocol (e.g., the X/Open XA protocol) in order to allow non-transactional resources (e.g., applications and/or devices) to be included within a transactional operation. At least one embodiment of the present invention provides an architecture that defines the concept of a plugin, a component which can be easily extended to incorporate new resources (e.g., applications and/or devices) under the transactional framework. For instance, plugins may be developed that define tasks to be performed via non-transactional resource(s), and when coupled with the Activation Resource Manager, the tasks defined by one or more plugins may be performed as a transaction by the non-transactional resource(s). For example, plugins may be implemented to cover a wide range of IDC resources (e.g., IDC software applications and/or devices), such as web servers, ftp servers, DNS servers, LDAP services, usage measurement services, QoS services, management services, and database services, which may be non-transactional resources.

According to at least one embodiment, the plugins may each declare one or more services to the Activation Resource Manager, which at bootstrap and via introspection, exports them to a message bus, such as an Enterprise Application Integration (EAI) bus, or application server (e.g., BEA elink or any Enterprise JavaBeans (EJB) application server). Once the services are enlisted to be part of an activation transaction, the Activation Resource Manager takes care of interfacing the bus' Transaction Manager in the sequence of events defined by a transaction protocol (e.g., the XA protocol), and to appropriately invoke the proper plugins to execute the service, validate it, undo it, or check for complete rollback of the service. To properly implement the ACID (Atomicity, Consistency, Isolation, and Durability) properties of a flat transaction, in certain embodiments, the Activation Resource Manager provides lock handling, transactional logging and recovery features. Additionally, in certain embodiments of the present invention, several modes of operation are provided to enable the Activation Resource Manager to properly control several different types of resources (e.g., applications and/or devices). For instance, a plugin may declare which of several different modes of operation the Activation Resource Manager is to utilize when invoking such plugin. The particular mode of operation may dictate how tasks are to be performed by the resource in order to activate a desired service (e.g., to activate a customer account) as a transaction. Thus, for instance, the order of operation according to a transactional protocol (e.g., the XA protocol) may be effectively modified for a resource depending on the operational mode selected for the Activation Resource Manager.

Further, it should be understood that the various embodiments of the present invention are not intended to be limited solely to activation of services, but may enable performance of any desired service utilizing non-transactional resources to perform at least part of such desired service as a transaction. Thus, while many examples are provided herein in which a Resource Manager enables activation of service, the present invention is not intended to be limited only to such activation of service, but rather such activation of service is intended solely as an example that renders the disclosure enabling for many other types of functional services (other than activation of a service) that may be performed by various embodiments utilizing non-transactional resources controlled by a Resource Manager to perform such functional services as transactions.

Turning to Fig. 2, an exemplary computing environment 200 is shown in which various embodiments of the present invention may be implemented. As described in greater detail below, the implementation of Fig. 2 provides a specific example of a DTP environment in which a client application is communicatively coupled to a message bus that directs requests to appropriate resources. For instance, a client application may comprise a customer care system 203, which may be operable to service customers in various manners. Customer care system 203 may be any suitable processor-based system, and may be communicatively coupled to one or more data storage devices having information stored therein, such as customer information 205, services information 206, and inventory information 207. Customer care system 203 may further include (or be communicatively coupled to) trouble-ticketing system 204. Various types of interfaces may be provided to customer care system 203. For instance, a graphical user interface (GUI) 201 may be provided for a customer service representative (CSR) to enable such CSR to interact with customer care system 203. Alternatively (or additionally), a web interface 202 may be provided to enable customer service representatives and/or customers to access customer care system 203 via the Internet or an Intranet, as examples. Various implementations of such a customer care system are well known in the art, and any implementation now known or later discovered is intended to be within the scope of the present invention. Additionally, any type of client application may be implemented, and therefore the present invention is not intended to be limited solely to a customer care system.

Customer care system 203 may trigger manual actions 208, which may include adding new hardware (e.g., as may be the case if the service is a dedicated web hosting and there are no more available machines prepared), and requesting new domain names for the service to interNIC (if the customer wants the domain name "www.customer.com," this needs to be requested). Also, customer care system 203 may be communicatively coupled to a message bus, which in the example of Fig. 2 is an Enterprise Application Integration (EAI) bus 210. EAI is a popular message bus, which enables unrestricted sharing of data and business processes throughout networked applications or data sources in an organization. EAI bus 210 is well known in the art, and implementations of such EAI bus 210 are available from various vendors, such as BEA Systems, Inc. EAI bus 210 provides bulletin board 211, which is a service commonly provided by an EAI bus to advertise the functional services available to a client application via such EAI bus 210 so that a client may determine which service to invoke. Thus, EAI bus 210 may advertise on bulletin board 211 the functional services available via such EAI bus 210. Customer care system 203 communicatively couples to EAI bus 210 via application-to-EAI bus (A2E) adapter 209, which allows the application to participate in the services offered by the bus. EAI vendors commonly provide adapter dev kits, which allow different application vendors to have adapters for their applications, and also to develop custom adapters. When implemented within an EJB environment, adapter 209 would be a client complying to the EJB invocation specification.

The functional services available via bulletin board 211 may be relatively high-level services, such as "activate a customer account." Such functional service may comprise various resource services that are needed to perform the functional service. For instance, upon a functional service being invoked by a client application (e.g., customer care system 203), various resource services may be executed to perform the functional service. For example, if customer care system 203 invokes a functional service to "activate a customer account," various resources 214A, 214B, and 214C may need to be executed to perform activation of a customer account. For instance, resource 214A may be a billing system to which the customer account needs to be added, resource 214B may be a database of customers to which the customer account needs to be added, and resource 214C may be a QoS application that needs to be configured for monitoring the quality of service provided to the new customer.

If resources 214A, 214B, and 214C are transactional resources, then known transaction-based processing techniques may be utilized to perform tasks via such resources in a transactional manner. For instance, if each of resources 214A, 214B, and 214C recognize a transaction protocol (such as XA), then such transaction protocol may be utilized to perform tasks on each of resources 214A, 214B, and 214C as a transaction. However, within many computing environments at least some of the resources needed to perform a desired functional service are not transactional resources. For example, within an IDC, various resources are commonly provided by different vendors and are not transactional resources that are readily capable of recognizing a transaction protocol in order to perform tasks as a transaction. For instance, continuing with the above example in which a functional service is invoked to "activate a customer account," resource 214A may be a billing system to which the customer account needs to be added, resource 214B may be a database of customers to which the customer account needs to be added, and resource 214C may be a QoS application that needs to be configured for monitoring the quality of service provided to the new customer. Further, resources 214A, 214B, and 214C may each be non-transactional resources that do not readily recognize a transaction protocol. Accordingly, resources 214A, 214B, and 214C are not readily able to perform the desired functional service "activate a customer account" as a transaction.

However, various embodiments of the present invention provide a Resource Manager that enables non-transactional resources to be utilized within a transaction. In the example of Fig. 2, an invoked functional service (e.g., "activate a customer account") may comprise various different resource services (or tasks) that are to be performed by different resources 214A, 214B, and 214C as a transaction. Thus, EAI bus 210 may request the appropriate resource services from resources 214A, 214B, and 214C via EAI bus-to-application (E2A) adapters 212A, 212B, and 212C (which may also be referred to herein as EAI bus-to-resource adapters). Because resources 214A and 214B are non-transactional resources in the example of Fig. 2, a resource manager 213A and 213B may be implemented to effectively proxy such resources (e.g., applications) in a transactional manner. That is, a resource manager is responsible for controlling performance of the appropriate tasks by resources 214A and 214B. For instance, resource manager 213A controls performance of tasks by resource 214A, and resource manager 213B controls performance of tasks by resource 214B. It should be understood that while different resource managers are shown for resources 214A and 214B in the example of Fig. 2, in various embodiments a single resource manager may be implemented to control a plurality of different resources. Thus, E2A adapters 212A and 212B provide an interface from EAI bus 210 to resource managers 213A and 213B, respectively, which effectively proxy resources 214A and 214B.

Also, in the example of Fig. 2, resource 214C may be a transactional resource, and therefore an E2A adapter 212C may be utilized to interact directly with such resource 214C in a transactional manner without requiring implementation of a resource manager to act as a proxy. Accordingly, one or more of resources 214A, 214B, and 214C may be utilized to perform various tasks as a transaction. Alternatively, if resource 214C is a non-transactional resource, it may be utilized without transactional integrity (that is, EAI bus 210 may not enlist it in transactional services). If resource 214C is a non-transactional resource, various embodiments of the present invention enable a resource manager to be implemented to control its interactions with EAI bus 210 to enable performance of tasks by such resource 214C in a transactional manner.

Various embodiments of the present invention enable various non-transactional resources to be utilized in performing a requested functional service as a transaction. For example, even though resources 214A and 214B are non-transactional, tasks may be performed thereon in a transactional manner in order to complete the desired functional service (e.g., "activate a customer account") as a transaction. Additionally, if resource 214C is a transactional resource, it may also be included in performance of tasks as a transaction in the example of Fig. 2. For instance, as shown in Fig. 2, the various resource services that comprise an invoked functional service are handled as a true transaction having atomicity, constistency, isolation, and durability (ACID) properties. Such ACID properties a generally characteristic properties of a true transaction, and if a transaction violates any of such ACID properties, undefined (usually undesired) behavior may result. A true transaction's changes to a state are atomic: either all happen or none happen. A true transaction is consistent in that it is a correct transformation of the state. That is, the actions taken as a group do not violate any of the integrity constraints associated with the state. A true transaction is isolated in that even though transactions may execute concurrently, it appears to each transaction that others executed either before or after it. A true transaction is durable in that once a transaction completes successfully (commits), its changes to the state survive failures.

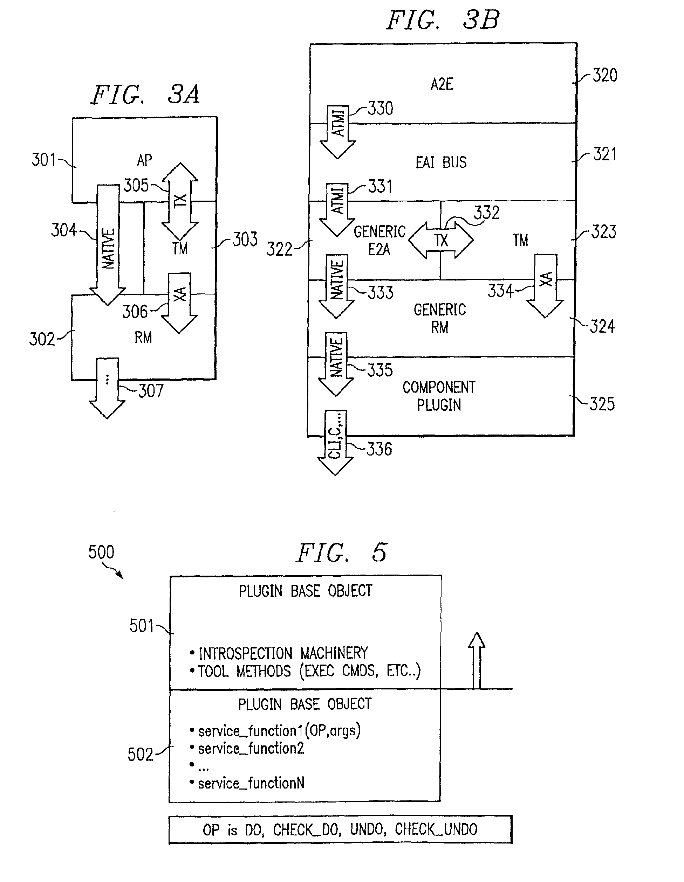

Turning to Fig. 3A, a typical X/Open DTP model is shown within which various embodiments of the present invention may be implemented. The DTP model of Fig. 3A comprises an application program 301, resource manager 302, and transaction manager 303. Application program 301 generally specifies actions which constitute a transaction. That is, application program 301 (e.g., customer care system 203 of Fig. 2) may request/invoke a particular transaction. Resource Manager 302 provides access to shared resources, which according to various embodiments of the present invention may include non-transactional resources. Transaction Manager 303 assigns identifiers to transactions, monitors their progress, and takes responsibility for transaction completion and for failure recovery.

In typical operation, application program 301 defines transaction boundaries through a transactional (TX) interface 305. That is, application program 301 communicates with Transaction Manager 303 to delimit transactions (begin, commit, or abort). Typically, Transaction Manager 303 provides application program 301 with API calls to inform it of the start, end and disposition of transactions. Application program 301 utilizes resources from one or more Resource Managers 302. That is, application program 301 communicates with Resource Manager 302 directly via native interface 304 to perform useful work. Generally, Resource Manager 302 provides the means of communication between itself and application program 301, and the most common method of communication therebetween is Embedded Structured Query Language (SQL). Thus, for instance, native interface 304 may comprise an Embedded SQL interface. Additionally, Transaction Manager 303 and Resource Manager 302 exchange transaction information via a transaction-based interface 306, such as an XA interface. The transaction-based interface 306 may define the protocol for transaction coordination, commitment, and recovery. Resource Manager 302 communicates with one or more resources (either directly or indirectly via a plugin component) in order to perform useful work on such resources via interface 307.

Turning now to Fig. 3B, an exemplary implementation of one embodiment of the present invention is shown as a model. The model of Fig. 3B comprises an application-to-enterprise bus (A2E) adapter 320, EAI bus 321, EAI bus-to-resource manager (E2A) adapter 322, Transaction Manager 323, Resource Manager 324, and plugin 325. Thus, an application program may invoke a transaction via A2E 320, which communicates the appropriate ATMI commands 330, 331 via EAI bus 321 to E2A 322. E2A 322 may define transaction boundaries through a transactional (TX) interface 332. That is, E2A 322 communicates with Transaction Manager 323 to delimit transactions (begin, commit, or abort). Additionally, E2A 322 utilizes resources from one or more Resource Managers 324 by communicating with Resource Manager(s) 302 directly via native interface 333 (e.g., Embedded SQL) to perform useful work. Additionally, Transaction Manager 323 and Resource Manager 324 exchange transaction information via a transaction-based interface 334, such as an XA interface. The transaction-based interface 334 may define the protocol for transaction coordination, commitment, and recovery. According to various embodiments of the present invention, Resource Manager 324 may communicate with one or more plugins 325 via native interface 335, and such plugin(s) 325 may communicate with one or more resources, which may include non-transactional resources, via interface 336 in order to perform useful work on such resources. Interface 336 may enable invocation of services in any of a variety of languages and scripts. For example, in at least one embodiment, plugin 325 is an object (e.g., a Java object), which may enable services to be invoked via interface 336 in any of various different languages or scripts. For instance, plugins exist that enable communication to resources via Java Database Connectivity (JDBC), Java Native Interface (JNI) to wrap C invocations, command line invocations in ksh, and windows scripting, as examples.

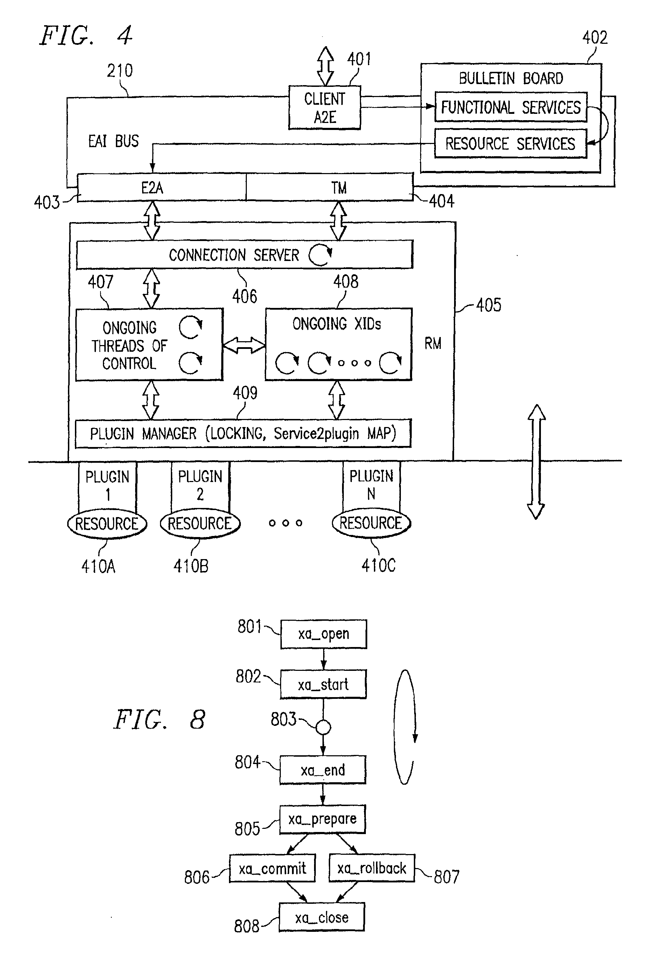

Fig. 4 shows an exemplary implementation of one embodiment of the present invention in further detail. A client application program (not shown) may interface with EAI bus 210 via A2E adapter 401. Such client application program may, for example, comprise customer care system 203 shown in Fig. 2. EAI bus 210 may provide bulletin board 402 to advertise the functional services available to a client application via EAI bus 210. As described above, the functional services available via bulletin board 402 may be relatively high-level services, such as "activate a customer account." Such functional service may comprise various resource services that are needed to perform the functional service. For instance, upon a functional service being invoked by a client application, various resource services may be executed to perform the functional service. For example, if a functional service is invoked to "activate a customer account," various resources 410A, 410B, and 410C may need to be executed to perform activation of a customer account. EAI bus 210 directs commands to the appropriate E2A adapter(s) 403.

Resource Manager 405 may be executing on any suitable processor-based device (e.g., on a personal computer, laptop, web server, ftp server, etc.). E2A adapter 403 communicates with Transaction Manager 404 to delimit transactions (begin, commit, or abort). Additionally, E2A 403 communicates with Resource Manager 405 (e.g., via a native interface, such as Embedded SQL) to perform the tasks (or resource services) for completing the desired functional service (e.g., "activating a customer account") as a transaction. Additionally, Transaction Manager 404 and Resource Manager 405 exchange transaction information. As shown in Fig. 4, E2A adapter 403 and Transaction Manager 404 communicate with Resource Manager 405 via connection server 406. Connection server 406 preferably provides two kinds of interfaces: an application interface, where invocations to services can be sent/received, and a transactional interface, wherein the transactional "signaling" is handled (e.g., demarcating transactions and committing/rolling them back).

Various threads of control 407 may be maintained within Resource Manager 405. That is, in certain embodiments, Resource Manager 405 may be multi-threaded to enable a plurality of different transactions to be controlled thereby concurrently. Thus, one or more transactions 408 may be controlled by Resource Manager 405. According to various embodiments of the present invention, transactions are represented as objects, which may each be identified by a particular transaction identifier (XID). The transaction objects may be in any of a plurality of different states according to the state of the transaction being executed. For instance, upon a transaction being initiated, its respective object may be in an initial state, and as various tasks are performed within the transaction, the object's state may change to represent performance of such tasks.

As described above, various embodiments enable plugins to be developed for defining services (or tasks) that may be performed with a resource, and Resource Manager 405 may utilize such plugins to perform tasks with the resources in a transactional manner. For instance, in the example of Fig. 4, various plugins 1, 2, ..., N are communicatively coupled to Resource Manager 405 to define services (or tasks) available for resources 410A, 410B, and 410C, which may be non-transactional resources. Resource Manager 405 may include plugin manager 409, which may, for example, provide such services as locking for the plugins and mapping of services (or tasks) to particular plugins. More specifically, plugin manager 409 may provide locking service to control access to different plugins. For instance, assume a transaction requires use of two different plugins to perform services (or tasks). The plugin manager may provide locking services to enable such different plugins to be shared in that one or more resources associated with each plugin may be effectively locked until the transaction is complete. Plugin manager 409 may also map services (or tasks) to particular plugins. For instance, assume that a transaction comprises various different tasks that are available from different plugins, plugin manager 409 may map each task to the appropriate plugin that is capable of executing such task on the proper resource.

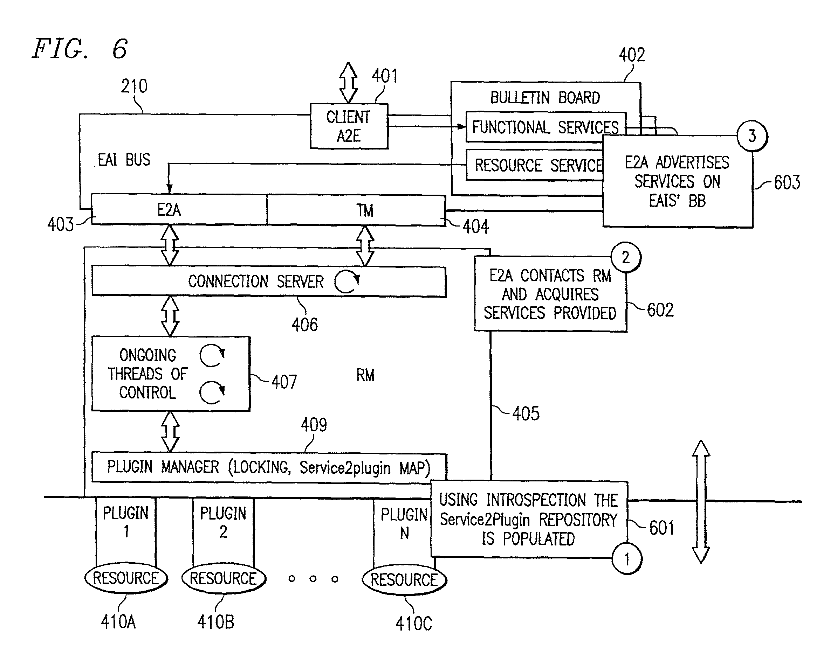

Fig. 5 provides an exemplary implementation 500 for enabling plugins according to one embodiment of the present invention. As shown, a plugin base object 501 may be defined, which enables coupling of a specialized plugin object 502 to the Resource Manager. Plugin base object 501 may define introspection machinery and tool methods (including commands that may be executed, etc.). Specialized plugin(s) 502 may then be developed, which define tasks (or services) for a resource. When specialized plugin 502 is coupled to base plugin 501, it may inherit attributes from such base plugin. For instance, once specialized plugin 502 inherits the attributes of base plugin 501 it may have access to a set of methods that can be used to execute commands to the Resource Manager, and it may also inherit the introspection machinery that allows the Resource Manager to effectively see the services available from specialized plugin 502. Thereafter, the Resource Manager may call any of the services (or tasks) available in specialized plugin 502, and the Resource Manager may control performance of tasks called from one or more different plugins to effectively handle them as being within a transaction. For instance, specialized plugin 502 may define service_functionl(OP, args), service_function2(OP, args), ..., service_functionN(OP, args). In this example, "OP" represents the DO, UNDO, CHECKDO, and CHECKUNDO operations commonly utilized in a transaction approach, which the plugin utilizes. Also, "args" are the parameters the plugin needs for a specific service. The number and types of such "args" parameters may vary depending on the particular service. For example, when activating a web server, the parameters may include IP, domain name, home directory, and any other parameters to be utilized by the plugin in activating such web server.

Turning to Fig. 6, actions that may be performed at boot time (or "bootstrap") according to at least one embodiment are shown. Again, the exemplary implementation of Fig. 4 is shown, and upon booting of the system in which Resource Manager 405 is implemented, operational blocks 601, 602, and 603 may be executed. More specifically, the Service2Plugin repository of Resource Manager 405 may be populated using introspection at operational block 601. Thus, the various services defined by plugins 1, 2, ..., N may be stored within the Service2Plugin repository of Resource Manager 405 so that Resource Manager 405 knows the services (or tasks) that each plugin makes available. From the tasks that are available via the plugins, Resource Manager 405 can determine the resource services that it can provide. That is, Resource Manager 405 can determine the transactions that it can perform utilizing the tasks available via its plugins. At operational block 602 E2A 403 contacts Resource Manager 405 and acquires the resource services provided by such Resource Manager 405. Thereafter, at operational block 603, E2A 403 advertises the resource services on bulletin board 402 of EAI bus 210. That is, atomic or resource level services may be advertised by EAI bus 210. Additional tools typically provided by EAI bus 210 enable a user to effectively "wrap" various resource services into functional services.

In certain embodiments, the resource manager is implemented to recognize newly added plugins at boot-time of the system, according to the procedure described in conjunction with Fig. 6. In many computing environments, such as typical IDC environments, plugins may not be added very frequently, and therefore such boot-time approach may be acceptable for recognition of new plugins. However, in certain computing environments, it may be desirable to implement the resource manager to dynamically recognize the introduction of plugins to the system. Certain embodiments of the present invention enable such dynamic recognition. For instance, in one embodiment, the resource manager may periodically re-scan for available plugins, and follow the procedure shown in Fig. 6 to update the available services on the bulletin board of the EAI bus.

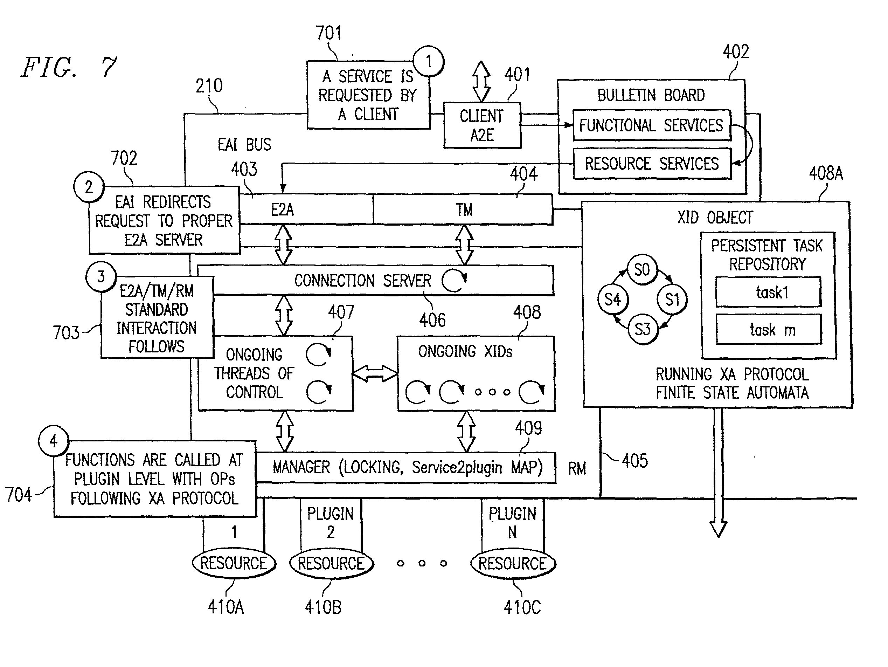

Turning now to Fig. 7, actions that may be performed during execution of a transaction according to at least one embodiment are shown. Again, the exemplary implementation of Fig. 4 is shown, and operational blocks 701, 702, 703, and 704 may be executed to perform a transaction. More specifically, at block 701 a desired functional service (e.g., "activate a customer account") is requested by a client. Such request is received by EAI bus 210 via A2E interface 401. At block 702, EAI bus 210 redirects the request to the proper E2A server. More specifically, EAI bus 210 directs the request to one or more E2A servers, such as E2A server 403, which provide the resource services needed to perform the requested functional service. At operational block 703, E2A server(s) 403, Transaction Manager 404, and Resource Manager 405 interact with one another as is common in performing a transaction. At block 704, Resource Manager 405 calls functions at the appropriate plugins, with the OPs of such functions following a transactional protocol, such as XA, to perform tasks at the appropriate resources in a transactional fashion even though such resources may include non-transactional resources.

For each transaction invoked, an XID object is maintained having a state corresponding to the state of its respective transaction. For instance, in the example of Fig. 7, an exemplary XID object 408A is shown. As shown, XID object 408A will have one of various different states (shown as states S0, S1, S3, and S4 in the example of Fig. 7). Also, a persistent task repository is maintained for the transaction represented by XID object 408A, which stores any update in any task the transaction object is performing. As an example, if a first XID (XID #1) is performing activation of a web server, it may have the information of table 1 (shown below) stored for such transaction:

**TABLE 1**

| **XID Number** | **Task Number** | **State** | **Service** | **Arguments** |
|---|---|---|---|---|
| XID #1 | #0 | DOING | add_web | www.customer.com; 15.15.15.15 |

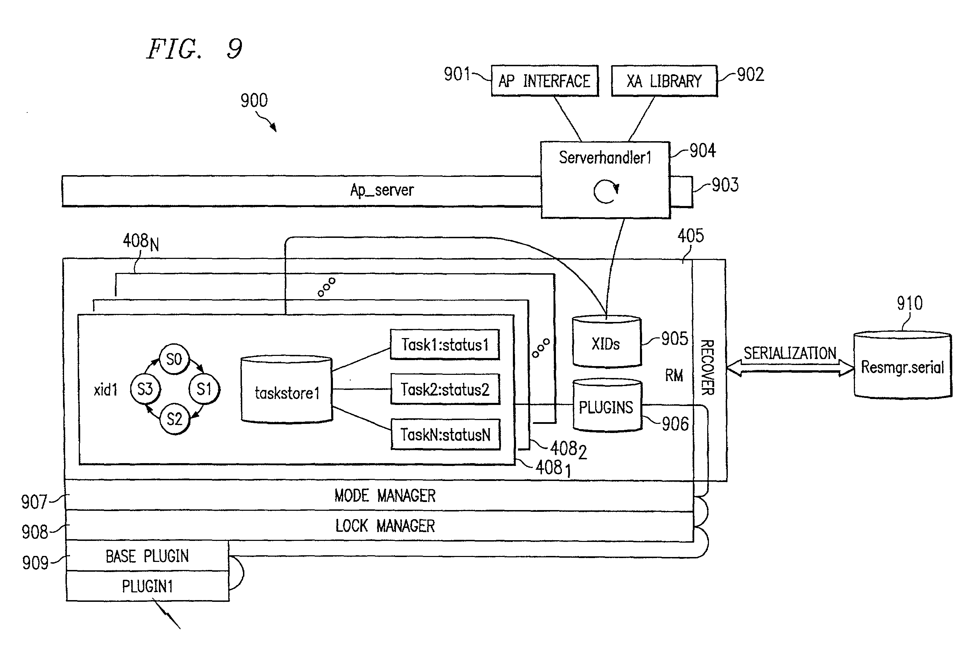

In at least one embodiment of the present invention, Resource Manager 405 operates according to the X/Open XA protocol. In other embodiments, Resource Manager 405 may be implemented to operate according to any suitable transactional protocol, and therefore the present invention is not intended to be limited solely to implementations utilizing the XA protocol. Turning now to Fig. 8, an exemplary flow diagram is shown, which illustrates typical execution of a transaction according to the XA protocol. At operational block 801, "xa_open" command is executed to create a new thread of control within Resource Manager 405. That is, upon Resource Manager 405 receiving a request for performance of a transaction, it creates a new thread of control for controlling such requested transaction. At operational block 802, "xa_start" command is executed to create an XID object that is associated with this particular thread of control. Thus, at operational block 802 an XID object is created for the requested transaction. At operational block 803, native commands are executed by means of plugin functions with DO OP. That is, Resource Manager 405 communicates native commands to one or more plugins to have particular tasks provided by such plugins performed. Thus, Resource Manager 405 effectively invokes the plugin service with a DO instruction, and consequently the plugin will attempt to DO the action on the underlying resource. Resource Manager 405 keeps a task with status DOING until the plugin returns either with a successful or unsuccessful completion. At block 804, "xa_end" command is executed, wherein all tasks are stored in the task repository for the XID object.

If the plugin returns successful completion of the task, Resource Manager 405 invokes a CHECK_DO operation of the service to double-check that the operation has actually been performed. Accordingly, at operational block 805, "xa_prepare" command is executed to cause the tasks stored in the task repository to be checked using the CHECK_DO OP. Thus, the status of the tasks is checked to determine whether they were each successfully completed. If it is determined that all of the tasks were successfully completed, then execution advances to block 806 whereat an "xa_commit" command is executed to make the performance of the tasks by the resource(s) permanent. The XID object for this transaction is then destroyed. If it is determined at block 805 that one or more of the tasks were not successfully completed, then execution advances to block 807 whereat an "xa_rollback" command is executed to rollback the tasks. That is, all tasks are executed with UNDO and CHECK_UNDO OPs to rollback the tasks. Accordingly, if it is determined (e.g., during the CHECK_DO OP) that something went wrong with performance of the task, Resource Manager 405 will execute an UNDO and CHECK_UNDO OPs, to be sure that everything is cleaned up (or undone for the task), and then Resource Manager 405 signals a rollback to the Transaction Manager, which will cause the rest of steps in the transaction to also be rolled back. Thereafter, once the tasks have been committed at block 806 or rolled back at block 807, an "xa_close" command is executed at block 808 to destroy this thread of control, thereby ending performance of the requested transaction. Thus, a transaction may be represented by an XID object, which comprises many different task objects representing the tasks that are to be performed for the transaction. Accordingly, various task objects within a transaction's XID object may each have one of many different states, such as INITIAL, DOING, DONE, CHECKING, CHECKED, UNDOING, UNDONE, or UNDOCHECKING corresponding to the current state of the corresponding task of such transaction.

Fig. 9 shows a logical representation of a preferred embodiment of the present invention. As described hereafter, in such a preferred embodiment, Resource Manager 405 is implemented to model the X/Open XA protocol to enable tasks to be performed as a transaction, even when utilizing non-transactional resources to perform such tasks. In other embodiments, Resource Manager 405 may be implemented to model any other transaction protocol, and therefore is not limited solely to XA. Resource Manager 405 implements a state machine in which various transactions are represented as objects, such as XIDs 408₁, 408₂, ... , 408_{N}. Accordingly, Resource Manager 405 may be implemented with the ability to serve multiple transaction requests concurrently, which may each be represented by a different XID object. As described above, each object may have a particular state corresponding to the state of its respective transaction.

A client application program (not shown) may request a particular functional service (or transaction). More specifically, application (AP) interface 901 may be provided to advertise the functional services available from Resource Manager 405 to a client application. The client application may request a particular functional service, and XA library 902 may be included to handle the performance of the functional service in a transactional manner. For instance, XA library 902 may delimit the requested transaction (e.g., may invoke various services that are all part of a common transaction, and then commit the transaction once it is successfully completed).

AP interface 901 and XA library 902 are communicatively coupled to Resource Manager 405 via AP_Server 903. In a typical client/server environment, the server has a listening thread (i.e., AP_Server 903) which spawns new threads to fulfill incoming requests (Serverhandler1, 2, ..., N). So, at any point in time, there may be any number (N) serverhandlers talking with actual clients, and one AP_Server listening for new incoming requests. Resource Manager 405 maintains a log of all XIDs (or transactions being executed) in XID log 905, and also maintains a log of all available plugins, as well as the services available with each plugin, in log 906. Each XID object has associated therewith a log of is respective ongoing tasks and their status, such as "taskstorel" associated with XID 408₁.

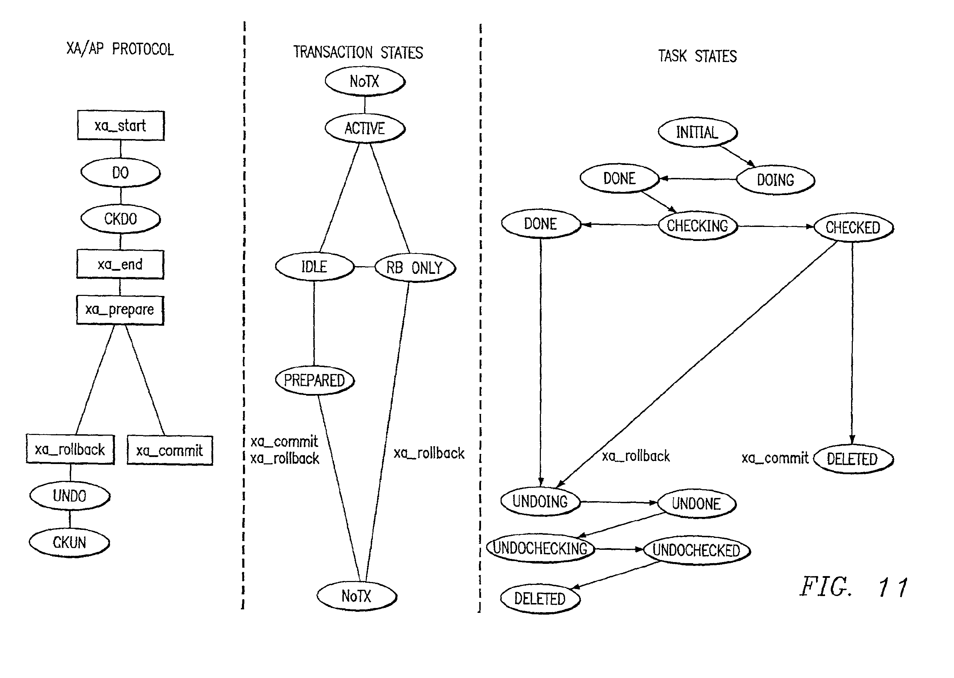

According to at least one embodiment, Resource Manager 405 includes a recovery feature. For example, Resource Manager 405 maintains a persistent task log 910, which tracks (or logs) the status of every task being performed for the various transactions being executed by Resource Manager 405. Thus, as described in greater detail hereafter in conjunction with Fig. 11, if the system on which Resource Manager 405 fails for some reason, once it resumes operation Resource Manager 405 can determine from log 910 the status of the various pending transactions being executed when the system failed. In this exemplary embodiment, log 910 is serial in that it logs each task (or object) as it is performed by Resource Manager 405. In at least one embodiment, checkpoints may be provided within an object to represent "Safe" points the resource manager can rollback to versus the rest of the persistance points.

As described above, various embodiments enable plugins to be developed for defining services (or tasks) that may be performed with a resource, and Resource Manager 405 may utilize such plugins to perform tasks with the resources in a transactional manner. As shown in Fig. 9, a base plugin object 909 may be provided, to which one or more specialized plugins may be coupled, such as Plugin1 in the example of Fig. 9. As described above with Fig. 5, specialized plugins may inherit certain attributes from base plugin object 909. For example, assume one resource on which tasks may be desired to be performed as a transaction is a Microsoft ITS web server. A developer may create a plugin, such as Plugin1 of Fig. 9, that is able to perform actions pursuant to the interface of such ITS web server. For instance, an action may be defined within the plugin to add a web site to such web server, and an action may be defined within the plugin to remove a web site from such web server. Resource Manager 405 may then utilize the plugin to perform such actions on the IIS web server resource in a transactional manner, wherein such actions may not otherwise be executed as a transaction on the ITS web server. As another example, various plugins may be developed for different types of databases (resources). For instance, a JDBC adapter (set of APIs designed to offer database access via Java) may be utilized within a plugin, and relatively minor modifications may be made to the plugin for each type of database that is to be controlled by Resource Manager 405.

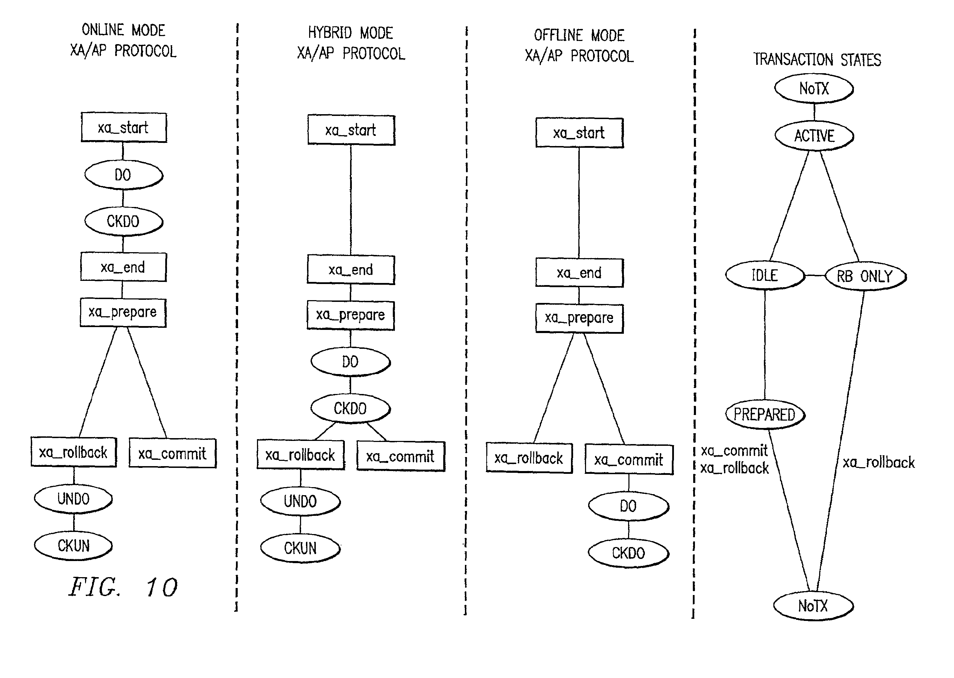

As described in greater detail hereafter with Fig. 10, certain embodiments of the present invention enable various operational modes to be implemented for Resource Manager 405. Thus, Resource Manager 405 may include mode manager 907 to manage the operational mode to be utilized by Resource Manager 405. According to at least one embodiment, a plugin coupled to Resource Manager 405 (such as Plugin1 of Fig. 9) may dictate the operational mode to be utilized by Resource Manager 405 when executing tasks via such plugin.

Resource Manager 405 may also include lock manager 908 which provides locking service to control access to different plugins. For instance, assume a transaction requires use of two different plugins to perform services (or tasks), lock manager 908 may provide locking services to enable such different plugins to be shared in that one or more resources associated with each plugin may be effectively locked until the transaction is complete.

As described above, various embodiments of the present invention may enable different modes of operation for the Resource Manager. More specifically, a plugin may dictate to the Resource Manager a particular mode of operation to be followed by the Resource Manager for such plugin. Fig. 10 shows exemplary modes of operation that may be available with certain embodiments of the present invention. For each mode of operation shown in Fig. 10, corresponding transaction states are also shown, which indicates the state of the XID object for the transaction at various stages of the performance of the transaction. One operational mode that the Resource Manager may follow is Online Mode. As shown in Fig. 10, the Online Mode follows standard operation of the XA protocol. Thus, for instance, if a resource to be used in performing task(s) for a transaction is a transactional resource, the Online Mode may be followed by the Resource Manager in controlling such resource. Also, some non-transactional resources may be controlled according to the Online Mode. For instance, if a non-transactional resource is performing a task that may be easily undone (or rolled back), then the Resource Manager may follow the Online Mode of operation for such resource. More specifically, a plugin developed to define tasks that may be performed by a non-transactional resource may dictate to the Resource Manager that it is to follow the Online Mode of operation in controlling the tasks to be performed by such plugin/resource.

In some instances, it may be desirable to postpone performance of certain tasks by resources until the prepare stage, which is essentially the point in the transaction protocol where the Resource Manager signs its contract with the Transaction Manager in the sense that it will be able to either commit or rollback all of its tasks. Thus, the Hybrid Mode of Fig. 10 allows for such an operation. The Hybrid Mode may, for instance, enable contentration of all access to a given plugin to a certain period (as opposed to accessing the plugin and its associated resource(s) when the client invokes the service), which may be desirable for certain resources that are not designed to be continuously interrupted.

In some instances, to enable a true transaction, the tasks within such transaction may not be actually performed in the manner commonly followed by transaction protocols. For example, a non-transactional resource (e.g., device) may be utilized to perform one or more tasks which cannot be easily rolled back once the tasks are actually performed. Examples of a resource and task that may not be easily rolled back once performed include sending a message (e.g., SNMP trap, email, SMS, fax, etc.), and performing a physical action that does not have an evident or simple rollback (e.g., printing a document). Thus, for such a resource, Offline Mode may be invoked for the Resource Manager by the plugin. As shown in Fig. 10, in Offline Mode, the Resource Manager will follow the transactional protocol (e.g., XA) with the transaction manager so that it appears to be performing the task(s) in the transactional manner dictated by such protocol, but essentially no action is actually performed in the resource (e.g., device) until all tasks have agreed that the transaction is successful. That is, in the Offline Mode, the DO and CHECK_DO OPs are performed for the resource after the "xa_commit" command has been executed to commit the transaction. In various embodiments, it then becomes the responsibility of the Resource Manager to ensure that the tasks are successfully performed by this resource. That is, because the "xa_commit" command has indicated that the transaction has been successfully performed when in fact one or more tasks remain to be performed by a resource, the Resource Manager takes responsibility for ensuring that the remaining tasks are successfully performed. For instance, if something goes wrong in performing the remaining tasks within the resource, the Resource Manager may retry invoking performance of the remaining tasks.

For each of the modes of operation, the Resource Manager may maintain a task life cycle, which provides a detailed status tracking mechanism for the Resource Manager as to each transaction that it is controlling. For instance, the Resource Manager may maintain a transaction log for each of the transactions that it is controlling, and in such log the Resource Manager may maintain the status of tasks being performed for the transaction. Accordingly, if, for example, the device on which the Resource Manager is implemented fails (or shuts down), upon the device resuming operation the Resource Manager can reliably determine the exact status of the tasks being performed for transactions. Turning to Fig. 11, an exemplary transaction status for Online Mode of operation is shown, which indicates the various task states that may be maintained by the Resource Manager in a transaction log to indicate the exact status of the performance of the transaction. For example, upon a control thread being created for a requested transaction (responsive to the "xa_start" command), the task state for performance of the transaction may be in an "initial" state. Thereafter, as the DO OPs are performed for the transaction, the task state for performance of the transaction transitions to "Doing." And, once the OPs are performed, the task state for performance of the transaction transitions to "Done." As shown in the example of Fig. 11, the status of performance of the transaction may be tracked by the Resource Manager to log the exact status of the performance of such transaction.

It should be understood that while various examples are described above in which a Resource Manager is implemented to performance of various services as tasks within an IDC, the present invention is not intended to be limited solely to implementation within an IDC. Rather, the IDC implementations described herein are intended solely as examples that render the disclosure enabling for implementing various embodiments of the present invention in any suitable computing environment. For instance, any multivendor software/hardware environment where a service update translates into interdependent updates to the different elements may benefit from implementation of an embodiment of the present invention. Whenever a service update translates into a group of actions which would benefit from the ACID properties provided by various embodiments of the present invention, such embodiments may be desired. Examples of such computing environments include, but are not limited to, general software configuration where the service update may be a new version of software, for instance, and multivendor networks where plugins may be developed for such network elements as routers, switches, load-balancers, etcetera to enable services to be performed thereon as transactions.

## Claims

1. A system for performing a desired functional service as a transaction utilizing one or more non-transactional resources, said system comprising:
one or more non-transactional resources 410A, 410B, 410C;
at least one component that defines one or more tasks executable by at least one of said one or more non-transactional resources; and
resource manager 405 operable to control execution of said one or more tasks defined by said at least one component as a transaction.

2. A system as claimed in claim 1 wherein said transaction includes performance of at least one of the services selected from the group consisting of: web hosting services, ftp service, database service, software application service, Domain Name Service (DNS), directory service, monitoring service, managing service, monitoring Quality of Service (QoS), usage measurement service, and billing service.

3. A system as claimed in claim 1 or 2 wherein said transaction includes activation of a service.

4. A system as claimed in any preceding claim wherein said non-transactional resources are resources of an Internet Data Center (IDC).

5. A system as claimed in any preceding claim wherein said at least one component is a plugin.

6. A method of performing a functional service as a transaction utilizing one or more-non-transactional resources within a computing envronment, said method comprising the steps of:
defining one or more tasks executable by at least one of said one or more non-transactional resources 410A, 410B, 410 C;
receiving at a resource manager 405 a request for performance of a plurality of tasks as a transaction; and
controlling by means of said resource manager execution of said one or more tasks as a transaction.

7. A method as claimed in claim 6 further comprising the steps of:
requesting said functional service by means of client application 203; and
receiving said request for said functional services by means of message bus 210 communicatively coupled to said client application and redirecting said request to one or more proper resource adapters 403;
wherein said resource manager acts as an intermediary between said one or more resource adapters and said one or more non-transactional resources to control said non-transactional resources to perform said plurality of tasks as a transaction.

8. A method as claimed in claim 7 wherein said resource manager interacts with a transaction manager via transactional protocol.

9. A resource manager 405 operable to control execution of tasks by one or more non-transactional resources 410A, 410B, 410C to perform said tasks as a transaction, said resource manager comprising:
code for receiving a request for performance of a plurality of tasks; and
code for controlling one or more non-transactional resources to perform said plurality of tasks as a transaction.
